(19) Europäisches Patentamt
European Patent Office
Office européen des brevets

(11) Veröffentlichungsnummer: **0 319 834**
**A2**

(12) # EUROPÄISCHE PATENTANMELDUNG

(21) Anmeldenummer: **88119920.2**

(51) Int. Cl.⁴: **C09D 5/44**

(22) Anmeldetag: **30.11.88**

(30) Priorität: **09.12.87 DE 3741661**

(43) Veröffentlichungstag der Anmeldung:
**14.06.89 Patentblatt 89/24**

(84) Benannte Vertragsstaaten:
**AT BE CH DE ES FR GB IT LI NL SE**

(71) Anmelder: **BASF Lacke + Farben Aktiengesellschaft**
**Max-Winkelmann-Strasse 80**
**D-4400 Münster(DE)**

(72) Erfinder: **Lawrenz, Dirk, Dr.**
**Neumuehle**
**D-6733 Hassloch(DE)**
Erfinder: **Schupp, Hans, Dr.**
**Jean-Voelker-Strasse 40**
**D-6520 Worms 1(DE)**
Erfinder: **Schwerzel, Thomas, Dr.**
**Budapester Strasse 51**
**D-6700 Ludwigshafen(DE)**
Erfinder: **Oslowski, Hans-Josef, Dr.**
**Heinrichstrasse 5**
**D-4400 Muenster(DE)**
Erfinder: **Heimann, Ulrich**
**Heideggerstrasse 29**
**D-4400 Muenster(DE)**

(74) Vertreter: **Welzel, Gunther, Dr. et al**
**c/o BASF Aktiengesellschaft**
**Carl-Bosch-Strasse 38**
**D-6700 Ludwigshafen(DE)**

(54) **Bindemittel für die kathodische Elektrotauchlackierung.**

(57) Die vorliegende Erfindung betrifft Bindemittel für die kathodische Elektrotauchlackierung, die durch Protonieren mit Säure wasserverdünnbar sind, enthaltend eine organische aminhaltige Kunstharzkomponente (A) und eine phenolische Mannichbase (B) sowie deren Verwendung in Form einer wäßrigen Dispersion für die kathodische Elektrotauchlackierung elektrisch leitfähiger Substrate.

EP 0 319 834 A2

## Bindemittel für die kathodische Elektrotauchlackierung

Die vorliegende Erfindung betrifft Bindemittel für die kathodische Elektrotauchlackierung, die durch Protonieren mit Säure wasserverdünnbar sind, enthaltend eine organische aminhaltige kunstharzkomponente (A) und eine phenolische Mannichbase (B) sowie deren Verwendung in Form einer wäßrigen Dispersion für die kathodische Elektrotauchlackierung elektrisch leitfähiger Substrate.

Die meisten der heute gebräuchlichen Elektrotauchlacke mit hohem Umgriff und gutem Korrosionsschutz, bestehen aus Amino-Epoxidharzen auf Basis Bisphenol A (2,2-Bis-(4-hydroxyphenyl)-propan) und Aminen und/oder Aminoalkoholen, die in DE-A 34 22 457, DE-A 33 25 061 und DE-A 34 44 110 beschrieben sind. Die Vernetzung dieser Bindemittel erfolgt meist thermisch bei Einbrenntemperaturen zwischen 120 und 200°C. Eine Art der Vernetzung besteht in der Anwendung von phenolischen Mannichbasen, wie sie in der DE-A 34 22 456 beschrieben sind. Um bei diesen Vernetzern auf ausreichend niedrige Einbrenntemperaturen zu kommen, sind Bindemittel mit einem relativ hohen Anteil von primären oder sekundären Aminogruppen nötig. Trotz des insgesamt positiven Eigenschaftsbildes der so erhaltenen Lacke weisen sie in bestimmten Bereichen Mängel auf, die sie für eine Anwendung in besonders anspruchsvollen Bereichen, wie sie etwa in der Karosseriebeschichtung in der Autmobilindustrie gegeben sind, nicht geeignet erscheinen lassen. Bei der Vernetzung mit Mannichbasen des Standes der Technik war vor allem die Haftung auf nicht vorbehandeltem Blech sowie die Schichtdicke der erhaltenen Lackfilme nicht zufriedenstellend.

Ziel der Arbeiten war es daher, die vorstehend genannten Mängel des Mannichbasen-vernetzenden Elektrotauchlacksystems zu beheben. Überraschenderweise wurde dabei gefunden, daß eine Modifizierung der in der DE-A 34 22 457 beschriebenen phenolischen Mannichbasen-Vernetzer mit einem aliphatischen und/oder cycloaliphatischen Polyepoxid mit einem mittleren Molekulargewicht zwischen 174 und 1.000 die vorstehend genannten Mängel beseitigt.

Gegenstand der vorliegenden Erfindung sind Bindemittel für die kathodische Elektrotauchlackierung, die durch Protonieren mit Säuren wasserverdünnbar sind, enthaltend

(A) 50 bis 95 Gew.% eines Polyadditionsproduktes mit einem mittleren Molekulargewicht von 200 bis 20.000 mit primären, sekundären und/oder tertiären Aminogruppen mit einer Aminzahl von 30 bis 150 und sekundären und gegebenenfalls primären Hydroxylgruppen und

(B) 5 bis 50 Gew.% einer oder mehrerer phenolischer Mannichbasen, erhältlich aus
- (a) einem oder mehreren mehrkernigen Polyphenolen,
- (b) Formaldehyd oder einer Formaldehyd-liefernden Verbindung und
- (c) einem oder mehreren sekundären aliphatischen Aminen,

mit der Maßgabe, daß zur Herstellung der Komponente (B) ein Polyphenol (a) verwendet wird, erhältlich durch Umsetzen eines niedermolekularen Polyphenols mit einem mittleren Molekulargewicht zwischen 186 und 500 mit einem aliphatischen und/oder cycloaliphatischen Polyepoxid mit einem mittleren Molekulargewicht zwischen 174 und 1.000 in einem Äquivalenzverhältnis von 1,2:1 bis 10:1,
und daß pro Äquivalent Polyphenol (a) nicht mehr als ein Äquivalent sekundäres Amin (c) und nicht mehr als zwei Äquivalente Formaldehyd (b) eingesetzt werden,
sowie deren Verwendung zum Beschichten von Gegenständen mit elektrisch leitenden Oberflächen nach dem kathodischen Elektrotauchlackierverfahren.

Ferner bezieht sich die vorliegende Erfindung auf mit Lacküberzügen versehene Gegenstände, die durch Verwendung der erfindungsgemäßen Bindemittel erhalten worden sind.

Zu den Aufbaukomponenten des erfindungsgemäßen Bindemittels gibt es im einzelnen folgendes zu sagen:

Als Komponente (A) kommen solche Polyadditionsprodukte in Frage, die ein mittleres Molekulargewicht von 200 bis 20.000, vorzugsweise 1.200 bis 4.000 haben und primäre, sekundäre und/oder tertiäre Aminogruppen und sekundäre und gegebenenfalls primäre Hydroxylgruppen aufweisen, mit einer Aminzahl von 30 bis 150, bevorzugt 45 bis 120, besonders bevorzugt 70 bis 100.

Geeignete Polyadditionsprodukte sind vor allem Umsetzungsprodukte von Polyepoxidverbindungen mit Aminen. Die Verwendung von Amino-Epoxidharzen wird für Grundierungen mit hohem Korrosionsschutzniveau bevorzugt. Beispiele für Amino-Epoxidharze sind Umsetzungsprodukte von epoxidgruppenhaltigen Harzen mit vorzugsweise endständigen Epoxidgruppen und gesättigten und/oder ungesättigten primären und/oder sekundären Aminen bzw. Aminoalkoholen. Diese können am Alkylrest durch mindestens eine

primäre und/oder sekundäre Hydroxylgruppe, durch die Mono- oder Dialkylaminogruppe und/oder durch eine primäre Aminogruppe, die durch Ketiminisierung sein kann, modifiziert sein.

Als Polyepoxidverbindungen zur Herstellung der Komponente (A) können beliebige Materialien verwendet werden, insbesondere, wenn sie ein mittleres Molekulargewicht von 300 bis 6000 und im Mittel 1,5 bis 3,0 Epoxidgruppen pro Molekül enthalten, vorzugsweise Verbindungen mit 2 Epoxidgruppen pro Molekül. Bevorzugt sind Polyepoxidverbindungen mit mittleren Molekulargewichten von 350 bis 5000, insbesondere 350 bis 2000. Besonders bevorzugte Polyepoxidverbindungen sind z.B. Glycidylether von im Mittel mindestens 2 phenolische Hydroxylgruppen im Molekül enthaltenden Polyphenolen, die sich in üblicher Weise durch Veretherung mit einem Epihalohydrin in Gegenwart von Alkali herstellen lassen. Beispiele für geeignete Phenolverbindungen sind 2,2-Bis-(4-hydroxyphenyl)-propan-(Bisphenol A), 4,4′-Dihydroxybenzophenon, 1,1-Bis-(4-hydroxyphenyl)-ethan, 1,1-Bis-(4-hydroxyphenyl)-isobutan, 2,2-Bis-(4-hydroxy-tert.-butylphenyl)-propan, Bis-(4-hydroxynaphthyl)-methan und 1,5-Dihydroxynaphthalin. In manchen Fällen ist es wünschenswert, aromatische Polyepoxidverbindungen mit höherem Molekulargewicht einzusetzen. Diese werden erhalten, indem man die oben genannten Diglycidylether mit einem Polyphenol, wie beispielsweise 2,2-Bis-(4-hydroxyphenyl)-propan reagieren läßt und dann die erhaltenen Produkte mit Epichlorhydrin unter Herstellung von Polyglycidylethern weiter umsetzt.

Unter den bevorzugten Polyglycidylethern von Polyphenolen sind diejenigen mit Epoxid-Äquivalentgewichten im Bereich von 180 bis 1000 besonders bevorzugt. Aromatische Polyepoxide mit einem höheren Epoxid-Äquivalentgewicht können aus solchen mit einem niedrigen Epoxid-Äquivalentgewicht und Polyphenolen hergestellt werden.

Eine andere geeignete Klasse von Polyepoxidverbindungen für die Umsetzung zu Komponente (A) sind Polyglycidylether von phenolischen Novolakharzen, durch deren Verwendung die Funktionalität von 2 bis auf etwa 6 Glycidylgruppen pro Molekül gesteigert werden kann. Ebenfalls geeignet sind Polyglycidylether von mehrwertigen Alkoholen wie von Ethylenglykol, Diethylenglykol, Triethylenglykol, 1,2-Propylenglykol, 1,3-Propandiol, 1,5-Pentandiol, 1,2,6-Hexantriol, Glycerin und 2,2-Bis-(4-hydroxycyclohexyl)-propan. Es können auch Polyglycidylester von Polycarbonsäuren verwendet werden.

Es können auch heterocyclische Epoxidverbindungen verwendet werden, wie 1,3-Diglycidyl-5,5-dimethylhydantoin, Triglycidylisocyanurat oder Diepoxide aus Bisimiden.

Das Einführen von Aminogruppen erfolgt entweder durch Addition von NH-reaktiven Verbindungen an die Epoxidgruppe oder durch Reaktion von Ketiminen, wie beispielsweise in DE-A-34 44 110 beschrieben, die durch Umsetzung eines primären Amins mit einer Carbonylverbindung unter Wasserabspaltung erhalten werden, oder durch Umsetzen der Hydroxylgruppen des Grundharzes mit basischen Monoisocyanaten, die durch Reaktion von aromatischen und/oder aliphatischen und/oder cycloaliphatischen Di- oder Polyisocyanaten mit Dialkylaminoalkoholen entstehen, wie beispielsweise in DE-A-27 07 405 beschrieben. Als NH-reaktive Verbindungen werden verwendet primäre Monoalkylamine und/oder bevorzugt sekundäre Monoamine wie Dialkylamine, Monoalkylhydroxyalkylamine oder Dihydroxyalkylamine. Beispiele für verwendbare Verbindungen sind Diethylamin, N,N′-Dimethylaminopropylamin, N-Methylaminoethanol, N-Ethylaminoethanol oder Diethanolamin. Bei Verwendung von primären Aminen wie Octylamin, Monoethanolamin, N,N-Dimethylaminopropylamin, N,N-Diethylaminoethylamin, N,N-Dimethylaminopentylamin oder Methoxypropylamin reagiert das Amin mit der Epoxidgruppe in Abhängigkeit von den angebotenen stöchiometrischen Verhältnissen mit 1 bis 2 Epoxidgruppen unter Molekülvergrößerung. Mit primären und sekundären Diaminen tritt eine Kettenverlängerung ein. Als sekundäre Diamine, bevorzugt langkettige Diamine, werden N,N′-Dialkyldiaminoalkane oder Umsetzungsprodukte von gesättigten Glycidylethern oder -estern mit primären Diaminoalkanen verwendet, wie das Additionsprodukt von Hexamethylendiamin mit 2 Mol Glycidylester der Versaticsäure. Als primäre Diamine werden bevorzugt $\alpha,\omega$-Diaminoalkane verwendet, wie 1,6-Diaminohexan oder Amidamine dimerer Fettsäuren. Um eine Mehrfachreaktion der primären Aminogruppen zu verhindern, ist es vorteilhaft, die primäre Aminogruppe durch Ketiminisierung mit einer Carbonylverbindung zu schützen und in dieser Form mit dem Epoxid umzusetzen.

Die Reaktion der Amine mit den Epoxiden beginnt schon bei Raumtemperatur und ist im allgemeinen exotherm. Um eine vollständige Umsetzung zu erreichen, ist es in der Regel notwendig, die Temperatur zeitweise auf etwa 50 bis 120 °C zu erhöhen. Die Ketimingruppen erfordern eine höhere Reaktionstemperatur zwischen 80 und 150 °C, bevorzugt zwischen 110 und 130 °C. Das 1,2-epoxidgruppenhaltige Harz wird vor Zugabe des Amins in organischen Lösungsmitteln, wie Toluol, Xylol oder Methylisobutylketon gelöst.

Die für den Vernetzungsprozess wichtigen primären und/oder sekundären Aminogruppen müssen in ausreichender Anzahl vorhanden sein.

Das Einführen von primären Aminogruppen in das Amino-Epoxidharz kann auf die einfachste Art dadurch erfolgen, daß eine diprimäre Diaminkomponente im Überschuß zu einem mindestens eine, bevorzugt zwei Epoxidgruppen pro Molekül enthaltenden Epoxidharz gegeben wird und nach erfolgter

Reaktion der Überschuß an Diamin entfernt wird. Dazu kann neben einer einfachen Destillation auch ein Dünnschichtverdampfungsverfahren oder eine Wasserdampfdestillation angewendet werden. Eine ausreichende Zahl von primären Aminogruppen wird ebenfalls erreicht, wenn nur ein geringer Überschuß verwendet wird, der so gewählt wird, daß nach der Reaktion nur sehr wenig freies Diamin in dem Bindemittel enthalten ist, andererseits aber der Molekulargewichtsaufbau sich in den oben genannten Grenzen hält. Das Diamin kann dabei nach allgemein bekannten Verfahren mit einer Carbonylverbindung zu einem Ketimin umgesetzt werden, was den Vorteil eines kontrollierten Harzaufbaus bietet, da jede Ketimingruppierung nur einmal mit einer Epoxidgruppe reagiert.

Das Einführen von primären Aminogruppen kann auch durch Umsetzen von mindestens einer, bevorzugt mindestens zwei Epoxidgruppen pro Molekül enthaltenden Kunstharzen mit einem amino- und/oder hydroxylgruppenhaltigen Ketimin und/oder Aldimin und/oder Polyamin erfolgen. Bei dem bevorzugten Ketimin handelt es sich um Umsetzungsprodukte aus Ketonen und sekundären Aminogruppen enthaltenden Alkylaminen, wie Methylisobutylketon und Diethylentriamin. Die Reaktionstemperatur wird hier so gewählt, daß die Ketimingruppierung nicht mit dem Epoxid reagiert. Das Ketimin schützt daher die primäre Aminogruppe so, daß eine weitere funktionelle Gruppe, bevorzugt eine sekundäre Aminogruppe ohne Schwierigkeiten mit dem Epoxidharz umgesetzt werden kann.

Das Amino-Epoxidharz kann auch mit gesättigten oder ungesättigten Polycarbonsäuren und/oder Hydroxycarbonsäuren modifiziert sein. Aliphatische, cycloaliphatische und/oder aromatische Polycarbonsäuren verschiedener Kettenlänge sind beispielsweise Adipinsäure, Sebacinsäure, Fumarsäure, Isophthalsäure oder dimere Fettsäure. Als Hydroxyalkylcarbonsäuren werden Milchsäure, Dimethylpropionsäure oder auch carboxyl- und hydroxylgruppenhaltige Polyester verwendet.

Sekundäre Aminogruppen können nach dem schon beschriebenen Verfahren über eine Reaktion von Ketimingruppen mit Epoxidgruppen bei erhöhten Temperaturen erhalten werden.

Bei der Dispergierung der Kunstharze in Wasser hydrolisieren die nicht umgesetzten Ketimingruppen zu primären Aminogruppen, die Epoxid-Ketimin-Addukte dagegen zu sekundären Aminogruppen.

Für die Stabilität der Elektrotauchlackdispersionen ist es häufig vorteilhaft, wenn die Komponente (A) zusätzlich primäre und/oder sekundäre Hydroxylgruppen enthält. Sekundäre Hydroxylgruppen entstehen bei der Reaktion von Epoxidgruppen mit nukleophilen Verbindungen wie Phenolen oder Aminen. Primäre Hydroxylgruppen werden bevorzugt über die Reaktion von Alkanolaminen mit Epoxidgruppen in das Bindemittel eingeführt. Bevorzugte Verbindungen sind N-Methylethanolamin, N-Ethylethanolamin und Diethanolamin.

Die vorstehend beschriebenen fremdvernetzenden, aminogruppenhaltigen und hydroxylgruppenhaltigen Komponenten (A) werden zusammen mit phenolischen Mannichbasen-Vernetzungsmitteln verwendet, die nachfolgend als Komponente (B) bezeichnet werden.

Gemäß dem Stand der Technik werden dabei auf 50 bis 95 Gew.% Kunstharzbindemittel (A) 50 bis 5 Gew.% Vernetzungsmittel eingesetzt. Das bevorzugte Mischungsverhältnis der Komponenten (A) und (B) liegt zwischen 90 zu 10 und 60 zu 40 und wird empirisch aus den optimal erreichbaren anwendungstechnischen Eigenschaften bei der gegebenen Einbrenntemperatur ermittelt.

Die phenolischen Mannichbasen (B) werden aus mehrkernigen Polyphenolen durch Aminomethylierung (Mannich-Reaktion) hergestellt. Um eine gute Dispersionsstabilität und ein akzeptables Eigenschaftsbild des Lackfilmes zu erreichen, ist es erforderlich, daß bei der Herstellung nicht mehr als ein Aminmolekül pro Phenolkern eingebaut wird (siehe DE 34 22 457).

Zur Herstellung der mehrkernigen Polyphenole (a) kommen alle mehrkernigen Phenole mit mindestens zwei Phenolkernen in Betracht, die im Molekül mindestens zwei zu verschiedenen Hydroxylgruppen orthoständige Wasserstoffatome tragen. Beispiele solcher mehrkernigen Phenole sind solche der allgemeinen Formel

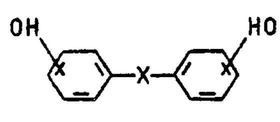

wobei die Hydroxylgruppen in ortho- oder para-Stellung zu X stehen und X ein geradkettiger oder verzweigter, zweiwertiger aliphatischer Rest mit 1 bis 3 Kohlenstoffatomen oder $SO_2$, SO, O oder $CH$-$NRCH_2$- (mit R = Alkylrest mit 1 bis 16 C-Atomen) ist; bevorzugtes Polyphenol ist 2,2-Bis-(4-hydroxyphenyl)-propan (Bisphenol A). Weitere geeignete Polyphenole sind niedermolekulare Umsetzungsprodukte aus Polyphenolen und Formaldehyd, sogenannte Novolake. Die benötigten Polyphenole können auch "in situ" aus Monophenolen und Formaldehyd erzeugt werden, wenn während der Aminomethylierung größere als

dem eingesetzten Amin äquivalente Mengen an Formaldehyd eingesetzt werden. Die Polyphenole weisen mittlere Molgewichte von 186 bis 500 auf.

Diese niedermolekularen Polyphenole werden in einer Additionsreaktion mit aliphatischen und/oder cycloaliphatischen Polyepoxiden in einem Äquivalenzverhältnis von 1,2 : 1 bis 10 : 1, bevorzugt 1,5 : 1 bis 4 : 1 zu kettenverlängerten Polyphenolen umgesetzt.

Als Polyepoxide für die Herstellung der Komponente B können prinzipiell alle Polyepoxide verwendet werden, die einen aliphatischen bzw. cycloaliphatischen Molekülaufbau haben und die pro Molekül zwischen 1,5 bis 3 Epoxidgruppen aufweisen. Die aliphatischen Molekülsegmente können dabei weitere, mit Epoxidgruppen nicht reagierende funktionelle Gruppen aufweisen, wie etwa Ether-, Ester- oder Amidgruppen. Weiterhin können die Polyepoxide verzweigte oder unverzweigte aliphatische Strukturen haben. Beispiele für Polyepoxide sind Polyoxyalkylenpolyglycidylether oder Polyesterpolyglycidylether. Als bevorzugte Polyepoxide werden Polypropylenglykoldiglycidylether mit einem Epoxidäquivalentgewicht von 250 bis 400, Polytetrahydrofurandiglycidylether mit einem Epoxidäquivalentgewicht von 300 bis 500, ein hydriertes Derivat eines Bisphenol A-Diglycidylethers mit einem Epoxidäquivalentgewicht von etwa 200, ein Polyglycidylether des Glycerins mit einem Epoxidäquivalentgewicht von etwa 180, ein Polyglycidylether des Pentaerythrits mit einem Epoxidäquivalentgewicht von etwa 200, Hexandioldiglycidyletgher, Butandioldiglycidylether und ein epoxidiertes Derivat eines Dicarbonsäureesters aus Adipinsäure und 3-Hydroxymethylcyclohexen mit einem Epoxidäquivalentgewicht von etwa 200 verwendet.

Als Komponente (c) werden bevorzugt solche sekundären aliphatischen Amine verwendet, die eine gewisse Flüchtigkeit besitzen, z.B. solche mit einem Siedepunkt von unter 250 °C bei einem Druck von 1000 mbar. Beispiele geeigneter Amine sind Dialkylamine wie Dimethylamin, Diethylamin, Methylethanolamin, Ethylethanolamin, Morpholin, Piperidin. Besonders bevorzugt sind Dialkylamine, deren Alkylgruppen zusammen 5 bis 15 Kohlenstoffatome beinhalten wie z.B. Ethylpropylamin, Dipropylamin, Diisopropylamin, Dibutylamin, Diisobutylamin, Dipentylamin, Dihexylamin, Dicyclohexylamin sowie Gemische dieser Dialkylamine. Auch primäre Amine wie z.B. Methylamin, Ethylamin, Propylamin oder Butylamin können in untergeordneten Mengen mitverwendet werden.

Der Einbau der Amine (c) in die Polyphenole erfolgt über eine Methylenbrücke. Dazu wird Formaldehyd oder eine Formaldehyd-liefernde Verbindung (b) wie Paraformaldehyd benötigt. Diese Umsetzung der Phenole mit Aldehyd und sekundärem Amin wird Aminomethylierung oder "Mannich"-Reaktion genannt. Das entstehende Produkt ist die phenolische Mannich-Base. Die Reaktion kann bei Raumtemperatur, zweckmäßigerweise jedoch bei erhöhter Temperatur bis etwa 150 °C durchgeführt werden. Lösemittel sind dabei nicht nötig. Auch ist es nicht nötig, das bei der Reaktion gebildete Wasser zu entfernen. Das Wasser kann jedoch problemlos unter vermindertem Druck oder mit einem organischen Lösemittel als Schleppmittel entfernt werden. Die "Mannich"-Reaktion kann auch ohne Lösungsmittel durchgeführt werden, sofern die Reaktionsprodukte bei der Umsetzungstemperatur flüssig sind. Es können aber auch übliche Lösemittel wie Alkohole, Ketone, Ester, Ether oder Kohlenwasserstoffe eingesetzt werden. Beispiele geeigneter Lösemittel sind Butanol, Methylisobutylketon, Toluol und Ethylglykolacetat.

Zur Herstellung der erfindungsgemäßen Bindemittel werden 50 bis 95, vorzugsweise 60 bis 90 Gew.% der Komponente (A) mit 5 bis 50, vorzugsweise 10 bis 40 Gew.% der Komponente (B) entweder in Substanz oder zweckmäßigerweise in mit organischen Lösemitteln verdünnter Form gemischt. Häufig ist es vorteilhaft, die Komponenten durch partielle Ankondensation verträglicher zu machen. Dazu genügt es, die Mischung der Komponenten einige Zeit zu erwärmen, z.B. auf 35 bis 110, vorzugsweise 50 bis 100 °C. Das Fortschreiten der Ankondensation, bei der im wesentlichen freie Methylolgruppen oder Aminomethylengruppen der Komponente (B) mit den primären bzw. sekundären Aminogruppen der Komponente (A) reagieren, kann durch Messen der Viskositätserhöhung verfolgt werden.

Zur Herstellung einer wäßrigen Dispersion wird die Bindemittelzusammensetzung (A) + (B) mit einer anorganischen oder organischen Säure wie Ameisensäure, Essigsäure, Milchsäure oder Phosphorsäure versetzt und anschließend auf Verarbeitungskonzentration verdünnt. Man kann jedoch auch die Bindemittelzusammensetzung langsam unter Rühren in angesäuertes Wasser einfließen lassen.

Zur Herstellung von Elektrotauchbädern können dem erfindungsgemäßen Bindemittel noch andere Bindemittel, Pigmente sowie weitere bei der Elektrotauchlackierung übliche Hilfs- und Zusatzstoffe wie Füllstoffe, Korrosionsinhibitoren, Dispergierhilfsmittel, Entschäumer, Lösemittel oder auch weitere Harzkomponenten zugesetzt werden. Bevorzugt werden als Korrosionsinhibitoren Kupfer-II-Salze in einer Konzentration von 100 bis 1000 ppm verwendet. Die Elektrotauchbäder besitzen üblicherweise einen Feststoffgehalt von 5 bis 30 Gew.%. Die Abscheidung erfolgt üblicherweise bei Temperaturen von 15 bis 40 °C, während einer Zeit von 1 bis 5 Minuten bei einer angelegten Spannung von 50 bis 500 Volt. Der zu beschichtende elektrisch leitende Körper, beispielsweise ein Kupfer-, Aluminium- oder Stahlblech, das gegebenenfalls chemisch vorbehandelt, z.B. phosphatiert sein kann, wird dabei als Kathode geschaltet. Der abgeschiedene

Film kann bei Temperaturen von 120 bis 200, vorzugsweise 130 bis 180 °C innerhalb von 5 bis 45, vorzugsweise 10 bis 30 Minuten gehärtet werden.

Herstellung von Vorprodukten

Vorprodukt 1

In einem mit einem Wasserabscheider versehenen Reaktionsgefäß wurden 12.440 g Hexamethylendiamin, 18.660 g dimere Fettsäure, 3000 g Leinölfettsäure und 2566 g Xylol auf 185 °C erhitzt. In 3 bis 4 Stunden wurden 1150 g Wasser und 1750 g Xylol abdestilliert. Das Produkt hatte eine Aminzahl von 233mg KOH/g.

Vorprodukt 2

In einem mit einem Wasserabscheider versehenen Reaktionsgefäß wurden 662 g des Vorproduktes 1 mit 566 g Methylisobutylketon zum Rückfluß erhitzt. Dabei wurden in 10 Stunden 52 g Wasser abdestilliert. Das Produkt hatte eine Aminzahl von 134 und einen Lösemittelanteil von 25 Gew.%.

Komponente (A): Amino-Epoxidharz

In einem Reaktionsgefäß wurden 752 g eines Diglycidylethers aus 2,2-Bis-(4-hydroxyphenyl)-propan (Bisphenol A) und Epichlorhydrin mit einem Äquivalentgewicht von 190, 205 g Bisphenol A und 50 g Propylenglykolmonophenylether mit 0,3 g Triphenylphosphin zur Reaktion gebracht. Bei einer Reaktionstemperatur von 130 °C wurde nach 3 Stunden ein Produkt mit einem Epoxidäquivalentgewicht von 430 erhalten. Mit 118 g Toluol wurde auf einen Festkörpergehalt von 85 Gew.% verdünnt. Anschließend wurden 598 g Vorprodukt 2 und 72 g Ethylethanolamin zugegeben und auf 120 °C erhitzt. Nach 5 Stunden war kein Epoxid mehr nachweisbar. Mit 273 g eines 9:1-Gemisches aus Isobutanol und Butylglykol wurde auf einen Festkörpergehalt von 70 Gew.% verdünnt.

Herstellung einer Pigmentpaste

640 g eines Diglycidylethers auf Basis von Bisphenol A und Epichlorhydrin mit einem Epoxidäquivalentgewicht von 485 und 160 g eines Diglycidylethers mit einem Epoxidäquivalentgewicht von 189 wurden bei 100 °C gemischt. In einem zweiten Gefäß wurden 452 g Hexamethylendiamin vorgelegt, auf 100 °C erhitzt und 720 g der heißen Epoxidharzmischung innerhalb einer Stunde zugegeben, wobei die Temperatur bei 100 °C gehalten wurde. Nach weiteren 30 Minuten wurde unter Temperaturerhöhung und vermindertem Druck das über schüssige Hexamethylendiamin abdestilliert, wobei eine Temperatur von 205 °C und ein Druck von 30 mbar erreicht wurde. Anschließend wurden 57,6 g Stearinsäure, 172,7 g dimere Fettsäure und 115 g Xylol zugesetzt. Dann wurde innerhalb von 90 Minuten bei 175 bis 180 °C das gebildete Wasser azeotrop abdestilliert. Anschließend wurden 58 g Butylglykol und 322 g Isobutanol zugegeben. Das Produkt hatte einen Feststoffgehalt von 70 Gew.% und eine Viskosität, gemessen bei 75 °C mit einem Platte/Kegel-Viskosimeter von 2240 mPas. 110 g des so erhaltenen Harzes wurden in einer Kugelmühle zusammen mit 36 g Ethylenglykolmonobutylether, 3 g Essigsäure, 170 g Titandioxid, 18 g Bleisilikat, 4,5 g Ruß und 170 g Wasser bis zu einer Kornfeinheit <7µm vermahlen.

Herstellung von phenolischen Mannichbasen (B)

Die in Tabelle 1 angegebene Menge an Polyepoxid wurde zusammen mit 68 g Bisphenol A und 0,4 g Triphenylphosphin 2 Stunden bei 150 °C gerührt, bis kein Epoxid mehr nachzuweisen war. Es wurde auf 130 °C gekühlt und 376 g Toluol hinzugefügt. Nach weiterem Kühlen auf 60 °C wurden 94,5 g Paraformaldehyd und 387 g Dibutylamin zugegeben und die Mischung weitere 2 Stunden bei 80 °C gerührt. Anschließend wurde das gebildete Reaktionswasser azeotrop abdestilliert.

Tabelle 1

| Polyglycidylether | Epoxidäquivalentgewicht | Teile | Beispiel |
|---|---|---|---|
| Butandiol-1,4-diglycidylether | 114 | 342 | 1 |
| Diepoxid des Esters aus Adipinsäure und 4-Hydroxymethylencyclohexen | 190 | 570 | 2 |
| Polytetrahydrofurandiglycidylether | 400 | 1200 | 3 |
| Polypropylenglykoldiglycidylether | 315 | 945 | 4 |
| Polyglycidylether des Glycerins | 168 | 505 | 5 |
| Hydriertes Derivat des Bisphenol A-diglycidylethers | 192 | 576 | 6 |

Vergleichsbeispiel

Phenolische Mannichbase nach dem Stand der Technik

152 g Bisphenol A, 63 g eines Diglycidylethers von Bisphenol A mit einem Epoxidäquivalentgewicht von 189 und 0,1 g Tributylphosphin wurden 1 Stunde auf 160°C erhitzt. Nach dieser Zeit ließ sich kein Epoxid mehr nachweisen und es war ein kettenverlängertes Diphenol entstanden. Dazu wurden 53,8 g Isopropanol, 129 g Di-n-butylamin, 31,5 g Paraformaldehyd und 17,6 g Isobutanol gegeben und 2 Stunden auf 80°C erhitzt. Das Produkt hatte einen Feststoffgehalt von 80 Gew.%.

Dispersionsherstellung

Die jeweiligen Komponenten (A) und (B) wurden in solchen Mengen gemischt, daß die resultierende Mischung 137 g Feststoff im Mischungsverhältnis 70 Gew.% Komponente (A) und 30 Gew.% Komponente (B) enthielt. Nach Zugabe von 3,1 g Essigsäure wurde mit entionisiertem Wasser unter Rühren eine 35 gew.%ige Dispersion hergestellt. Dazu wurden 139 g der oben angegebenen Pigmentpaste gegeben und mit entionisiertem Wasser auf 1000 g aufgefüllt. Die so hergestellten Elektrotauchbäder wurden 7 Tage bei 30°C gerührt. Dann wurde bei der angegebenen Spannung während 2 Minuten ein als Kathode geschaltetes Blech beschichtet und anschließend während 20 Minuten bei 160°C eingebrannt. Zu dem wäßrigen Elektrotauchbad wurden gegebenenfalls 200 ppm Cu-II-Ionen in Form einer wäßrigen Cu-II-acetat-Lösung gegeben.

In den folgenden Tabellen sind die anwendungstechnischen Ergebnisse zusammengefaßt:

| | | Beispiel | |
|---|---|---|---|
| | 1 | 2 | 3 |
| Baddaten: | | | |
| pH-Wert | 7.0 | 7.0 | 7.0 |
| Leitfähigkeit [uScm-1] | 2180 | 2170 | 2250 |
| Abscheidespannung [V] | 340 | 340 | 300 |
| Filmeigenschaften: | | | |
| Schichtdicke [um] | 15 | 14 | 30 |
| Unterrostung [mm] | | | |
| 480 h ASTM* unbehandeltes Blech | 2.2 | - | 5.0 |
| (mit Cu-Zusatz) | 2.1 | 2.1 | 3.4 |
| 1000 h ASTM* phosphatiertes Blech | 0.16 | 0.20 | 0.30 |
| 10 Zyklen Klimawechseltest** | 0.93 | 0.66 | 0.52 |

| | | Beispiel | |
|---|---|---|---|
| | 4 | 5 | 6 |
| Baddaten: | | | |
| pH-Wert | 7.0 | 7.0 | 7.0 |
| Leitfähigkeit [uScm-1] | 2230 | 2340 | 2130 |
| Abscheidespannung [V] | 300 | 340 | 360 |
| Filmeigenschaften: | | | |
| Schichtdicke [um] | 20 | 13 | 15,4 |
| Unterrostung [mm] | | | |
| 480 h ASTM* unbehandeltes Blech | 4.0 | 2.2 | 4.9 |
| (mit Cu-Zusatz) | 3.5 | 2.2 | 2.3 |
| 1000 h ASTM* phosphatiertes Blech | 0.35 | 0.24 | 0.08 |
| 10 Zyklen Klimawechseltest** | 0.88 | 0.62 | 0.39 |

| | Vergleichsbeispiel |
|---|---|
| Baddaten: | |
| pH-Wert | 7.0 |
| Leitfähigkeit [uScm-1] | 2050 |
| Abscheidespannung [V] | 350 |
| Filmeigenschaften: | |
| Schichtdicke [um] | 6 |
| Unterrostung [mm] | |
| 480 h ASTM* unbehandeltes Blech | 5.4 |
| (mit Cu-Zusatz) | 4.4 |
| 1000 h ASTM* phosphatiertes Blech | 0.24 |
| 10 Zyklen Klimawechseltest** | 0.77 |

* Salzsprühtest nach DIN 50021
** nach Prüfblatt VDA 621415

## Ansprüche

1. Bindemittel für die kathodische Elektrotauchlackierung, das durch Protonieren mit Säuren wasserverdünnbar ist, enthaltend
(A) 50 bis 95 Gew.% eines Polyadditionsproduktes mit einem mittleren Molekulargewicht von 200 bis 20.000 und mit primären, sekundären und/oder tertiären Aminogruppen mit einer Aminzahl von 30 bis 150 und sekundären und gegebenenfalls primären Hydroxylgruppen und
(B) 5 bis 50 Gew.% einer oder mehrerer phenolischer Mannichbasen, erhältlich aus
(a) einem oder mehreren mehrkernigen Polyphenolen,
(b) Formaldehyd oder einer Formaldehyd-liefernden Verbindung und
(c) einem oder mehreren sekundären aliphatischen Aminen,
mit der Maßgabe, daß zur Herstellung der Komponente (B) ein Polyphenol (a) verwendet wird, erhältlich

durch Umsetzen eines niedermolekularen Polyphenols mit einem mittleren Molekulargewicht zwischen 186 und 500 mit einem aliphatischen und/oder cycloaliphatischen Polyepoxid mit einem Molekulargewicht zwischen 174 und 1.000 in einem Äquivalenzverhältnis von 1,2:1 bis 10:1,
und daß pro Äquivalent Polyphenol (a) nicht mehr als ein Äquivalent sekundäres Amin (c) und nicht mehr als zwei Äquivalente Formaldehyd (b) verwendet werden.

2. Bindemittel nach Anspruch 1, enthaltend eine Komponente (B), zu deren Herstellung ein Polyphenol (a) verwendet wird, erhältlich aus einem Polyoxyalkylenpolyglycidylether oder einem Polyesterpolyglycidylether.

3. Bindemittel nach Anspruch 1 oder 2, enthaltend eine Komponente (B), zu deren Herstellung ein Polyphenol (a) verwendet wird, erhältlich aus einem Polypropylenglykoldiglycidylether mit einem Epoxidäquivalentgewicht von 250 bis 400.

4. Bindemittel nach einem der Ansprüche 1 bis 3, enthaltend eine Komponente (B), zu deren Herstellung ein Polyphenol verwendet wird, erhältlich aus einem Polytetrahydrofurandiglycidylether mit einem Epoxidäquivalentgewicht von 300 bis 500.

5. Bindemittel nach einem der Ansprüche 1 bis 4, enthaltend eine Komponente (B), zu deren Herstellung ein Polyphenol (a) verwendet wird, erhältlich aus einem hydrierten Derivat eines Bisphenol A-Diglycidylethers mit einem Epoxidäquivalentgewicht von etwa 200.

6. Bindemittel nach einem der Ansprüche 1 bis 5, enthaltend eine Komponente (B), zu deren Herstellung ein Polyphenol (a) verwendet wird, erhältlich aus einem Polyglycidylether des Glycerins mit einem Epoxidäquivalentgewicht von etwa 180.

7. Bindemittel nach einem der Ansprüche 1 bis 6, enthaltend eine Komponente (B), zu deren Herstellung ein Polyphenol (a) verwendet wird, erhältlich aus einem epoxidierten Derivat eines Dicarbonsäureesters aus Adipinsäure und 4-Hydroxymethylcyclohexen mit einem Epoxidäquivalentgewicht von etwa 200.

8. Bindemittel nach einem der Ansprüche 1 bis 7, enthaltend ein Aminoepoxidharz als Komponente (A).

9. Bindemittel nach einem der Ansprüche 1 bis 8, dadurch gekennzeichnet, daß die Komponenten (A) und (B) bei 50 bis 120 °C teilweise miteinander umgesetzt werden.

10. Verwendung des Bindemittels gemäß einem der Ansprüche 1 bis 9 in Form einer wäßrigen Dispersion, die gegebenenfalls zusätzlich Pigmente, Füllstoffe, Korrosionsinhibitoren, übliche Lackhilfsmittel und/oder Lösemittel für die kathodische Elektrotauchlackierung elektrisch leitfähiger Substrate.

11. Mit einem Lacküberzug versehener Gegenstand, dessen Überzug durch kathodische Elektrotauchlackierung unter Verwendung eines Bindemittels gemäß einem der Ansprüche 1 bis 9 hergestellt wurde.